# EUROPÄISCHE PATENTSCHRIFT

(11) **EP 3 614 068 B1**
(45) Veröffentlichungstag und Bekanntmachung des Hinweises auf die Patenterteilung: **19.05.2021**
(21) Anmeldenummer: 19191167.6
(22) Anmeldetag: 12.08.2019
(51) Int. Cl.: F24H 8/00

(54) **HEIZGERÄT**
HEATING DEVICE
APPAREIL DE CHAUFFAGE

(30) Priorität: 20.08.2018 DE 102018120191
(43) Veröffentlichungstag der Anmeldung: 26.02.2020
(73) Patentinhaber: Viessmann Werke GmbH & Co. KG, 35108 Allendorf (DE)
(72) Erfinder: Görge, Gunthard, 35260 Stadtallendorf (DE); Böcke, Jannik, 35116 Hatzfeld (DE)
(74) Vertreter: Wolf, Michael

(56) Entgegenhaltungen:
- EP-A1- 2 868 960
- EP-A2- 2 213 958
- WO-A1-2011/131024
- DE-U1-202008 013 120
- US-A- 5 704 343

## Beschreibung

Die Erfindung betrifft ein Heizgerät gemäß dem Oberbegriff des Patentanspruchs 1.

Ein Heizgerät der eingangs genannten Art ist aus dem Dokument DE 20 2008 013 120 U1 bekannt.

Des Weiteren sind ähnliche Heizgeräte aus dem allgemeinen Stand der Technik bekannt. Ein solches Heizgerät besteht aus einem Geräteinnenraum, in dem ein Abgas erzeugender Brenner und eine Führung für das Abgas angeordnet sind, wobei an die Führung eine mit einem Siphon versehene und nach außerhalb des Geräteinnenraums führende Abfuhrleitung für in der Führung anfallendes Kondensat angeschlossen ist, wobei im regulären Betrieb des Heizgerätes in der Abfuhrleitung, um den unerwünschten Austritt von Abgas über die Abfuhrleitung zu verhindern, eine freie Oberfläche des anfallenden Kondensats ausgebildet ist. Um darüber hinaus zu verhindern, dass Abgas zum Beispiel im Falle einer Verstopfung der Abgasführung über die Kondensatabfuhrleitung entweicht, ist ein besonders tiefer Siphon zur Aufnahme einer großen Menge des flüssigen Kondensats vorgesehen.

Der Erfindung liegt die Aufgabe zugrunde, ein Heizgerät der eingangs genannten Art zu verbessern. Insbesondere soll ein Heizgerät mit einem kompakteren Siphon geschaffen werden, bei dem aber trotzdem gewährleistet ist, dass bei Verstopfung der Abgasführung kein Abgas über die Kondensatabfuhrleitung entweichen kann.

Diese Aufgabe ist mit einem Heizgerät der eingangs genannten Art durch die im Kennzeichen des Patentanspruchs 1 aufgeführten Merkmale gelöst.

Nach der Erfindung ist also vorgesehen, dass die Abfuhrleitung an ihrem unteren Ende bis zum Siphon reichend und die Zusatzleitung seitlich von der Abfuhrleitung abzweigend ausgebildet ist.

Weiterhin ist vorgesehen, dass eine Zusatzleitung einerseits mit dem Geräteinnenraum und andererseits in Kondensatabfuhrrichtung gesehen hinter der freien Oberfläche, so wie sie im Regelbetrieb des Heizgeräts ausgebildet ist, mit der Abfuhrleitung verbunden ausgebildet ist. Unter "verbunden ausgebildet" ist dabei, wie unten noch genauer erläutert wird, zu verstehen, dass gegebenenfalls in die Abfuhrleitung eingedrungenes Abgas über die Zusatzleitung in den Geräteinnenraum zurückströmen kann, d. h. die Zusatzleitung ist im Notfall die Abfuhrleitung mit dem Geräteinnenraum pneumatisch verbindend ausgebildet.

Mit anderen Worten zeichnet sich die erfindungsgemäße Lösung somit dadurch aus, dass der Gefahr eines sogenannten Freiblasens des Siphons mit einer im Geräteinnenraum ausmündenden Zusatzleitung - also letztlich mit einem Doppelsiphon - begegnet wird. Im Fall der Fälle wird dabei das ungewollt in die Abfuhrleitung eingedrungene Abgas über die Zusatzleitung, die, wie weiter unten noch erläutert wird, auch einen recht großen Durchmesser haben kann, in den Geräteinnenraum geleitet bzw. gewissermaßen umgeleitet, wo es dann vom Brennergebläse angesaugt und dem Brenner zugeführt wird, was dann aufgrund des Sauerstoffmangels im Abgas in absehbarer Zeit zwangsläufig zum automatischen Abschalten des Brenners führt. Ein Freiblasen ist somit aufgrund der erfindungsgemäßen Konstruktion nicht möglich, vielmehr ist sogar gewährleistet, dass sich das Heizgerät bei nicht ordnungsgemäßer Abfuhr des Abgases praktisch selbst ausschaltet.

Andere vorteilhafte Weiterbildungen des erfindungsgemäßen Heizgerätes ergeben sich aus den abhängigen Patentansprüchen.

Der Vollständigkeit halber wird noch auf die folgenden beiden, weiter abliegenden Dokumente hingewiesen:
Aus dem Patentdokument DE 103 51 439 A1 ist ein Heizgerät bekannt, bei dem an der Abfuhrleitung (dort Bezugszeichen 17) eine zu einem Ventil (dort Bezugszeichen 30) führende Druckleitung (dort Bezugszeichen 34) vorgesehen ist. Diese Druckleitung ist dabei aber weder mit dem Geräteinnenraum (dieser spielt in diesem Dokument überhaupt keine Rolle) noch in Kondensatabfuhrrichtung gesehen hinter der freien Oberfläche mit der Abfuhrleitung (dort Bezugszeichen 17) verbunden ausgebildet.

Aus dem Patentdokument DE 10 2006 026 613 A1 ist ein Verfahren zur Vermeidung des Austrocknens eines Siphons eines Brennwert-Heizgerätes bekannt, bei dem allerdings bereits die im Patentanspruch 1 beanspruchte Zusatzleitung ersatzlos fehlt.

Das erfindungsgemäße Heizgerät einschließlich seiner vorteilhaften Weiterbildungen gemäß der abhängigen Patentansprüche wird nachfolgend anhand der zeichnerischen Darstellung verschiedener Ausführungsbeispiele näher erläutert.

Es zeigt schematisch
- Figur 1: eine erste Ausführungsform des erfindungsgemäßen Heizgerätes mit einer sowohl mit dem Siphon als auch mit der Zusatzleitung verbundenen Abfuhrleitung im regulären Betrieb; und
- Figur 2: das Heizgerät gemäß Figur 1 im Falle einer Verstopfung.

Das in den Figuren dargestellte Heizgerät besteht zunächst in bekannter Weise aus einem Geräteinnenraum 1, in dem ein Abgas erzeugender Brenner (insbesondere Gas- oder Ölbrenner) und eine Führung 2 für das Abgas angeordnet sind, wobei an die Führung 2 eine mit einem Siphon versehene und nach außerhalb des Geräteinnenraums 1 führende Abfuhrleitung 3 für in der Führung 2 anfallendes Kondensat angeschlossen ist, wobei im regulären Betrieb des Heizgerätes in der Abfuhrleitung 3 eine freie Oberfläche des anfallenden Kondensats ausgebildet ist.

Um die vom Heizgerät erzeugte Wärme nutzen zu können, ist darüber hinaus zwischen dem Brenner und der Führung 2 für das Abgas ein Wärmeübertrager zur Übertragung von Wärme vom Abgas auf ein flüssiges Heizkreismedium vorgesehen.

Damit das Kondensat gut abfließen kann, ist ferner vorgesehen, dass die Abfuhrleitung 3 an einer tiefsten Stelle der Führung 2 für das Abgas angeordnet ist. Die Maßgabe "tiefste Stelle" bezieht sich dabei auf diejenige Stelle der Führung 2, die der Erdoberfläche am nächsten ist, d. h. man könnte auch sagen "an einer geodätisch tiefsten Stelle". Der Begriff "geodätisch" wird dabei nachfolgend (und auch in den Patentansprüchen) somit stets in Bezug auf die Erdoberfläche verwendet.

Wesentlich, und dies gilt für alle möglichen Ausführungsformen des erfindungsgemäßen Heizgerätes, ist nun, dass eine Zusatzleitung 4 einerseits mit dem Geräteinnenraum 1 und andererseits in Kondensatabfuhrrichtung gesehen hinter der freien Oberfläche mit der Abfuhrleitung 3 verbunden ausgebildet ist. Die besagte Zusatzleitung 4 ist dabei offen in den Geräteinnenraum 1 ausmündend ausgebildet.

Besonders bevorzugt ist weiterhin vorgesehen, dass der Geräteinnenraum 1 als Luftkasten und als solcher als gegen einen Anordnungsraum des Heizgerätes abgedichtetes Gehäuse ausgebildet ist. Unter Anordnungsraum ist dabei der Raum eines Gebäudes zu verstehen, in dem das Heizgerät angeordnet ist, wobei sowohl die Abführung des Abgases als auch die Zuführung von Verbrennungsluft über mit der Umgebung des Gebäudes verbundene Rohrleitungen erfolgt, d. h. es findet kein Gasaustausch zwischen dem Anordnungsraum und dem Luftkasten statt.

Weiterhin ist bei allen Ausführungsformen des erfindungsgemäßen Heizgerätes vorgesehen, dass der besagte Siphon eine sich im regulären Betrieb des Heizgerätes auf gleicher geodätischen Höhe wie die freie Oberfläche des Kondensats in der Abfuhrleitung 3 befindliche Überlaufstelle 5 für das Kondensat aufweist, d. h. der Abstand der Überlaufstelle 5 zu einem Boden des Anordnungsraums entspricht dem Abstand der freien Oberfläche zu dem genannten Boden.

Zudem ist bevorzugt, und dies gilt für alle Ausführungsformen, dass die Abfuhrleitung 3 als ein an ihrem oberen Ende mit der Führung 2 verbundenes Fallrohr ausgebildet ist.

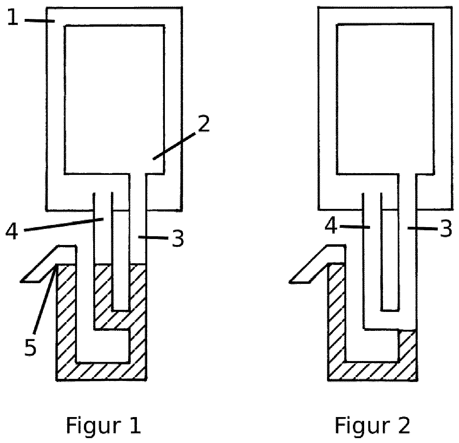

Des Weiteren ist die Abfuhrleitung 3 an ihrem unteren Ende bis zum Siphon reichend und die Zusatzleitung 4 seitlich von der Abfuhrleitung 3 abzweigend ausgebildet (siehe hierzu die Ausführungsformen gemäß der Figuren 1 und 2).

Des Weiteren ist bevorzugt, dass wahlweise die Abfuhrleitung 3, die Zusatzleitung 4 und/oder der Siphon aus einem kondensatbeständigen Kunststoff ausgebildet ist bzw. sind.

Zudem ist gegebenenfalls bevorzugt, dass die Zusatzleitung 4 einen Durchmesser aufweist, der mindestens doppelt so groß ist wie ein Durchmesser der Abfuhrleitung 3.

Das erfindungsgemäße Heizgerät funktioniert wie folgt:
Im regulären Betrieb des Heizgeräts entsteht Abgas im Geräteinnenraum 1, welches dann über die Führung 2 aus dem Heizgerät entweichen kann (der eigentliche Abgasanschluss ist dabei nicht extra dargestellt). Es entsteht im regulären Betrieb ebenfalls ein Kondensat in der Führung 2, welches durch die Abfuhrleitung 3 aus dem Heizgerät abfließen kann. Durch die Ausbildung eines Siphons zwischen der dem Geräteinnenraum 1 zugewandten Stelle der Abfuhrleitung 3 und der Überlaufstelle 5 derselben, wird bewirkt, dass immer ein wenig Kondensat in der Abfuhrleitung 3 verbleibt und sich eine freie Oberfläche des Kondensats in der Abfuhrleitung und der mit ihr fluidisch verbundenen Zusatzleitung 4 einstellt (siehe Figur 1). Durch den mit Kondensat gefluteten Bereich der Abfuhrleitung 3 wird bewirkt, dass kein Abgas durch die Abfuhrleitung 3 entweichen kann. Dies ist von großer Bedeutung, da ein Entweichen von Abgas durch die Abfuhrleitung möglicherweise dazu führt, dass dieses zum Beispiel in Wohnräume eindringt, was wiederum bei deren Bewohnern in gesundheitlichen Problemen resultieren kann.

Die ganz zu Anfang beschriebene Konstruktion funktioniert recht gut, solange der Abgasauslass der Führung 2 offen ist. Ist dieser jedoch verstopft, sammelt sich Abgas in der Führung 2 an und drängt in die Abfuhrleitung 3 für das Kondensat. Hierdurch wird zum einen Kondensat aus der Abfuhrleitung 3 verdrängt, sodass die Menge an flüssigem Kondensat zwischen Geräteinnenraum 1 und Überlaufstelle 5 verringert wird und zum anderen löst sich das Abgas verstärkt in dem Kondensat. Beides führt dazu, dass Abgas aus der Abfuhrleitung 3 über die Überlaufstelle 5 austreten kann.

Das erfindungsgemäße Heizgerät löst dieses Problem durch das Vorsehen einer Zusatzleitung 4 gemäß dem Patentanspruch 1. Diese führt dazu, dass im Falle einer Verstopfung des Abgasauslasses der Führung 2, das sich anstauende Abgas die freie Oberfläche des Kondensats in der Abfuhrleitung 3 unter den Punkt drückt, an dem die Zusatzleitung 4 von der Abfuhrleitung 3 abzweigt. Hierdurch wird eine nun vom Kondensat unversperrte Verbindung zwischen der Abfuhrleitung 3 und dem Geräteinnenraum 1 geschaffen (siehe hierzu Figur 2). Das Abgas fließt jetzt also durch diese Verbindung in den Geräteinnenraum und erstickt (früher oder später) den Brennprozess des Brenners darin. Durch den Ausfall des Brenners wird zum einen direkt verhindert, dass noch mehr Abgas produziert wird und zum anderen wird der Benutzer des Heizgeräts darauf aufmerksam, das dieses nicht mehr ordnungsgemäß funktioniert und kann, gegebenenfalls informiert durch eine entsprechende Fehlermeldung an dem Heizgerät, den Abgasauslass von der Verstopfung befreien. Die vorliegende Erfindung stellt somit eine effektive Verbesserung der Betriebssicherheit bei dennoch kompakter Bauweise eines Heizgerätes dar.

### Bezugszeichenliste

- 1: Geräteinnenraum
- 2: Führung
- 3: Abfuhrleitung
- 4: Zusatzleitung

- 5: Überlaufstelle

## Patentansprüche

1. Heizgerät, umfassend einen Geräteinnenraum (1), in dem ein Abgas erzeugender Brenner und eine Führung (2) für das Abgas angeordnet sind, wobei an die Führung (2) eine mit einem Siphon versehene und nach außerhalb des Geräteinnenraums (1) führende Abfuhrleitung (3) für in der Führung (2) anfallendes Kondensat angeschlossen ist, wobei im regulären Betrieb des Heizgerätes in der Abfuhrleitung (3) eine freie Oberfläche des anfallenden Kondensats ausgebildet ist, wobei eine Zusatzleitung (4) einerseits mit dem Geräteinnenraum (1) und andererseits in Kondensatabfuhrrichtung gesehen hinter der freien Oberfläche mit der Abfuhrleitung (3) verbunden ausgebildet ist,
**dadurch gekennzeichnet,**
**dass** die Abfuhrleitung (3) an ihrem unteren Ende bis zum Siphon reichend und die Zusatzleitung (4) seitlich von der Abfuhrleitung (3) abzweigend ausgebildet ist.

2. Heizgerät nach Anspruch 1,
**dadurch gekennzeichnet,**
**dass** der Geräteinnenraum (1) als Luftkasten und als solcher als gegen einen Anordnungsraum des Heizgerätes abgedichtetes Gehäuse ausgebildet ist.

3. Heizgerät nach Anspruch 1 oder 2,
**dadurch gekennzeichnet,**
**dass** der Siphon eine sich im regulären Betrieb des Heizgerätes auf gleicher geodätischen Höhe wie die freie Oberfläche des Kondensats in der Abfuhrleitung (3) befindliche Überlaufstelle (5) für das Kondensat aufweist.

4. Heizgerät nach einem der Ansprüche 1 bis 3,
**dadurch gekennzeichnet,**
**dass** die Abfuhrleitung (3) als an ihrem oberen Ende mit der Führung (2) verbundenes Fallrohr ausgebildet ist.

## Claims

1. A heating device, comprising a device interior (1) in which a burner producing waste gas and a guide (2) for the waste gas are arranged, wherein a discharge line (3) for condensate accumulating in the guide (2) provided with a siphon and leading outside of the device interior (1) is connected to the guide (2), wherein a free surface of the accumulating condensate is formed in the discharge line (3) during regular operation of the heating device, wherein an additional line (4) is designed to be connected, on the one hand, with the device interior (1), and, on the other hand, with the discharge line (3) behind the free surface in the direction of condensate discharge,
**characterized in that**
the discharge line (3) is designed to extend at its lower end to the siphon and the additional line (4) is designed to branch off laterally from the discharge line (3).

2. The heating device according to claim 1,
**characterized in that**
the device interior (1) is designed as an air box and as such is designed as a housing sealed off from an arrangement space of the heating device.

3. The heating device according to claim 1 or 2,
**characterized in that**
the siphon has an overflow point (5) for the condensate located at the same geodetic height as the free surface of the condensate in the discharge line (3) during regular operation of the heating device.

4. The heating device according to one of claims 1 to 3,
**characterized in that**
the discharge line (3) is designed as a downpipe connected at its upper end to the guide (2).

## Revendications

1. Appareil de chauffage, comprenant un compartiment intérieur d'appareil (1), dans lequel sont disposés un brûleur générant des gaz d'échappement et un système de guidage (2) pour les gaz d'échappement, sachant qu'au système de guidage (2) est raccordée un conduit d'évacuation (3) doté d'un siphon et conduisant en dehors du compartiment intérieur d'appareil (1) pour un condensat se déposant dans le système de guidage (2), sachant qu'une surface libre du condensat se déposant est constituée dans le conduit d'évacuation (3) au cours du fonctionnement régulier de l'appareil de chauffage, sachant qu'un conduit supplémentaire (4) est constitué relié d'une part au compartiment intérieur d'appareil (1) et d'autre part au conduit d'évacuation (3) vu dans la direction d'évacuation du condensat, derrière la surface libre,
**caractérisé en ce que**
le conduit d'évacuation (3) est constitué allant à son extrémité inférieure jusqu'au siphon et dérivant sur le côté le conduit supplémentaire (4) de la conduite d'évacuation (3).

2. Appareil de chauffage selon la revendication 1,
**caractérisé en ce que**
tout le compartiment intérieur d'appareil (1) est constitué comme un caisson d'air et comme tel, comme un coffrage étanchéifié contre un compartiment de montage de l'appareil de chauffage.

3. Appareil de chauffage selon la revendication 1 ou 2,
**caractérisé en ce que**
le siphon comporte un point de trop-plein (5) pour le condensat, se trouvant, en fonctionnement régulier de l'appareil de chauffage, à une même hauteur géodésique que la surface libre du condensat dans le conduit d'évacuation (3).

4. Appareil de chauffage selon l'une quelconque des revendications 1 à 3,
**caractérisé en ce que**
le conduit d'évacuation (3) est constitué comme un tuyau de descente relié à son extrémité supérieure au système de guidage (2).
